# EUROPÄISCHE PATENTSCHRIFT

(11) **EP 2 597 307 B1**
(45) Veröffentlichungstag und Bekanntmachung des Hinweises auf die Patenterteilung: **28.02.2018**
(21) Anmeldenummer: 12007319.2
(22) Anmeldetag: 25.10.2012
(51) Int. Cl.: F03D 80/70, F03D 80/80, F16H 57/04

(54) **Vorrichtung zur Übertragung von Versorgungsmitteln durch einen Antriebsstrang einer Windkraftanlage**
Device for the transmission of supplies by means of a drive train of a wind turbine
Dispositif de transmission de moyens d'alimentation par le biais d'une chaîne de transmission d'une éolienne

(30) Priorität: 25.11.2011 DE 102011119471
(43) Veröffentlichungstag der Anmeldung: 29.05.2013
(73) Patentinhaber: ZF Friedrichshafen AG, 88046 Friedrichshafen (DE)
(72) Erfinder: Weist, Dietmar, 44379 Dortmund (DE); Strasser, Dirk, 58339 Breckerfeld (DE)

(56) Entgegenhaltungen:
- EP-A1- 2 080 904
- DE-A1-102007 060 985
- DE-A1-102010 010 201
- US-A1- 2010 007 151

## Beschreibung

Die Erfindung betrifft eine Vorrichtung zur Übertragung von Versorgungsmitteln durch einen Antriebsstrang einer Windkraftanlage, welche einen Rotor zur Umwandlung einer Windströmung in eine Drehbewegung aufweist, der über eine Rotorwelle eingangsseitig eines Planetengetriebes zur Übersetzung ins Schnelle angeordnet ist, das ausgangsseitig an einen Generator zur Erzeugung elektrischer Energie aus der Drehbewegung angeschlossen ist, wobei zumindest durch eine als Hohlwelle ausgebildete Sonnenradwelle des Planetengetriebes ein doppelwandiges Durchführungsrohr zur Weiterleitung der Versorgungsmittel zum Rotor geführt ist, dessen äußerer Ringkanal als Schmierölleitung zur Schmierung der Planetenlager des Planetengetriebes und dessen innerer Zentralkanal zur Hindurchführung von Versorgungsleitungen zum Rotor ausgebildet ist. Weiterhin betrifft die Erfindung auch eine Windkraftanlage mit einem Antriebsstrang, durch welchen zumindest teilweise eine derartige Vorrichtung verläuft.

Das Einsatzgebiet der Erfindung erstreckt sich vornehmlich auf die Windkraftanlagentechnik. Es ist jedoch auch denkbar, dass andere, einen vergleichbaren Antriebsstrang aufweisende Strömungskraftanlagen mit der hier vorgeschlagenen Lösung ausrüstbar sind. Bei den hier besonders interessierenden Windkraftanlagen besteht der Antriebsstrang aus den Komponenten Rotor, Getriebe sowie Generator. Zumindest zwischen dem Rotor und dem Getriebe ist eine Rotorwelle zur Übertragung der Drehbewegung vorgesehen. Der elektrische Generator kann ebenfalls im Sinne eines sogenannten aufgelösten Antriebsstrangs über eine Welle ausgangsseitig des Getriebes angekoppelt sein. Daneben ist es jedoch auch denkbar, dass der Generator direkt am Getriebe angeflanscht wird. Die Rotorwelle sowie die Eingangswelle des Getriebes sind meist als durchgängige Hohlwellen für Durchführungsrohre, welche auch als Pitchrohre bezeichnet werden, zur Hindurchführung von Versorgungsmitteln, insbesondere elektrischen Kabeln oder Hydraulikleitungen, ausgeführt.

Gewöhnlich ist die mit dem elektrischen Generator verbundene Ausgangswelle des Getriebes achsversetzt zur Eingangswelle angeordnet. Bei einer ebenfalls möglichen koaxialen Ausführung von Eingangswelle und Ausgangswelle des Getriebes kann dieser als Hohlwelle ausgebildet sein, so dass die Durchführungsrohre vom Generator kommend durch das Getriebe bis hin zum Rotor geführt sind. Über die Durchführungsrohre erfolgt die hydraulische und/oder elektrische Versorgung der Rotorflügel, sowie der Nabe des Rotors, um beispielsweise eine Rotorblattverstellung vornehmen zu können.

Aus der DE 10 2007 060 985 A1 geht eine gattungsgemäße Vorrichtung zur Übertragung von Versorgungsmitteln durch den Teil des Antriebsstrangs hervor, welcher durch den Rotor sowie das Getriebe gebildet wird. Die zwischen dem Rotor und dem hier als Planetengetriebe ausgebildeten Getriebe der Windkraftanlage verlaufene Welle ist als Hohlwelle ausgeführt und erstreckt sich koaxial durch das Getriebe. Durch diese insoweit zentrale Hohlwelle verläuft ein rotierendes elektrisches Kabel, das elektrische Signale zur Rotorblattverstellung an den Rotor weitergibt. Während das rotierende Kabel ortsfest zum Rotor sowie der sich mitdrehenden Welle angeordnet ist, wird die elektrische Energie getriebeausgangsseitig über eine elektrische Schleifkontakteinrichtung übertragen. Die entsprechend der Polzahl ausgeführten elektrischen Kontakte kommen dabei an einer korrespondierend hierzu ausgebildeten Drehscheibe mit Schleiferbahnen zur Anlage, um eine elektrische Drehdurchführung zu bilden.

Aus der EP 2 080 904 A1 geht eine andere technische Lösung hervor, bei welcher ein zusätzliches Durchführungsrohr in die vorhandene Hohlwelle eingesetzt ist. Das Durchführungsrohr schützt die hierin verlaufenden elektrischen und hydraulischen Leitungen vor Beschädigungen. Ein weiteres Beispiel ist aus US2010/0007151 bekannt. Derartige Durchführungsrohre sind gewöhnlich einteilig ausgeführt. Daneben existieren auch mehrteilige Ausführungen, bei denen ein doppelwandiges Durchführungsrohr aus einem äußeren Rohr und einem inneren Rohr zusammengesetzt ist. Die beiden Rohre sind gewöhnlich miteinander verschweißt. Der zwischen dem inneren Rohr und dem äußeren Rohr gebildete Ringkanal des doppelwandigen Durchführungsrohres dient dabei als Schmierölleitung zum Transport von Schmieröl von außerhalb des Getriebes durch die Hohlwelle hindurch zum Bereich mindestens einer Planetenstufe. Von hier aus wird das Schmieröl über radial angeordnete Kanäle an den Planetenträger weitergeleitet, um die Wälzlagerung der Planetenräder zu schmieren. Demgegenüber umgibt das innere Rohr einen Zentralkanal zur Hindurchführung der Versorgungsleitungen zum Rotor hin.

Nachteilhaft bei der geschweißten Ausführung hat sich erwiesen, dass sich Schmierölreste und feste Bestandteile im äußeren Ringkanal festsetzen können. Wegen der Schweißkonstruktion lassen sich derartige Verunreinigungen nicht entfernen und derartige Durchführungsrohre sind nach zunehmender Querschnittsverengung vollständig auszutauschen und somit zu ersetzten.

Es ist daher die Aufgabe der vorliegenden Erfindung, eine gattungsgemäße Vorrichtung mit einem doppelwandigen Durchführungsrohr dahingehend weiter zu verbessern, dass eine Reinigung des äußeren Ringkanals mit geringem technischem Aufwand möglich ist.

Die Aufgabe wird ausgehend von einer Vorrichtung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, das das doppelwandige Durchführungsrohr ein inneres Rohr aufweist, das einseitig mit je einem Endstück zur Festlegung des Wandabstandes zwischen dem inneren Rohr und einem äußeren Rohr fest verbunden ist, wobei das koaxial zum inneren Rohr angeordnete äußere Rohr über je einen Dichtring auf die Endstücke lösbar aufgesteckt ist.

Der Vorteil der erfindungsgemäßen Lösung liegt darin, dass das aufgesteckte äußere Rohr axial vom inneren Rohr abziehbar ist, so dass der äußere Ringkanal freigelegt werden kann, um diesen gut zugänglich zu reinigen.

Vorzugsweise sollte zumindest eines der Endstücke einen Außendurchmesser aufweisen, der kleiner als der Innendurchmesser des äußeren Rohres ist. Hierdurch lässt sich das äußere Rohr zu zumindest einer Seite hin abziehen. Falls beide Endstücke des doppelwandigen Durchführungsrohrs mit derartigen Endstücken mit geringem Außendurchmesser ausgerüstet sind, lässt sich das äußere Rohr zu beiden Seiten hin vom inneren Rohr abziehen, um den äußeren Ringkanal freizulegen.

Zur Weiterleitung des Schmieröls vom äußeren Ringkanal sollte zumindest eines der vorzugsweise hohlzylinderartig geformten Endstücke mindestens einen Schmierölkanal aufweisen, der von außenradial des Endstückes in Achsrichtung in den äußeren Ringkanal des doppelwandigen Durchführungsrohres mündet. Ein derartiger Schmierölkanal kann beispielsweise über zwei rechtwinklig zueinander angeordnete Bohrungen hergestellt werden. Es ist auch möglich, mehrere derartige Schmierölkanäle beabstandet zueinander entlang des Umfangs des Endstücks anzuordnen, um einen insgesamt größeren Durchlaufquerschnitt zu erzielen.

Gemäß einer bevorzugten Ausführungsform des erfindungsgemäßen doppelwandigen Durchführungsrohres ist die feste Verbindung der Endstücke mit dem inneren Rohr als eine Schweißverbindung ausgeführt. Die Schweißverbindung besteht in diesem Fall aus einer durchgezogenen Schweißnaht, um eine zuverlässige Abdichtung zwischen den beiden Bauteilen zu realisieren.

Das innere Rohr und die beiden Endstücke sowie auch das äußere Rohr sollten aus einem schweißbaren Stahlmaterial ausgeführt werden, um die vorgenannte Schweißverbindung zu realisieren. Hierfür kann auch ein schweißbares Edelstahlmaterial verwendet werden.

Das erfindungsgemäß über das innere Rohr geschobene äußere Rohr ist vorzugsweise über mindestens einen als Dichtring ausgebildeten Sicherungsring an zumindest einem Endstück fixiert. Der Sicherungsring verhindert nach Montage des äußeren Rohrs eine Axialverschiebung relativ zum inneren Rohr, um die Dichtheit des äußeren Ringkanals dauerhaft sicherzustellen.

Zwischen der Innenwandung des äußeren Rohres und dem Endstück ist vorzugsweise ein Elastomerdichtring eingesetzt, so dass der das Schmieröl enthaltene äußere Ringkanal im Betrieb einen Schmierdruck von 1 bis 3 bar, max. 15 bar, standhält.

Wie bereits erwähnt, sind die durch den inneren Zentralkanal verlaufenden Versorgungsleitungen als hydraulische oder elektrische Leitungen ausgebildet. Zusätzlich ist es jedoch auch denkbar, neben den Versorgungsleitungen durch den inneren Zentralkanal ein Gestänge zur Verstellung des Rotors hindurchzuführen.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Darstellung eines Antriebsstrangs einer Windkraftanlage mit einem doppelwandigen Durchführungsrohr, und
- Figur 2: einen Längsschnitt durch ein doppelwandiges Durchführungsrohr mit aufgestecktem äußeren Rohr.

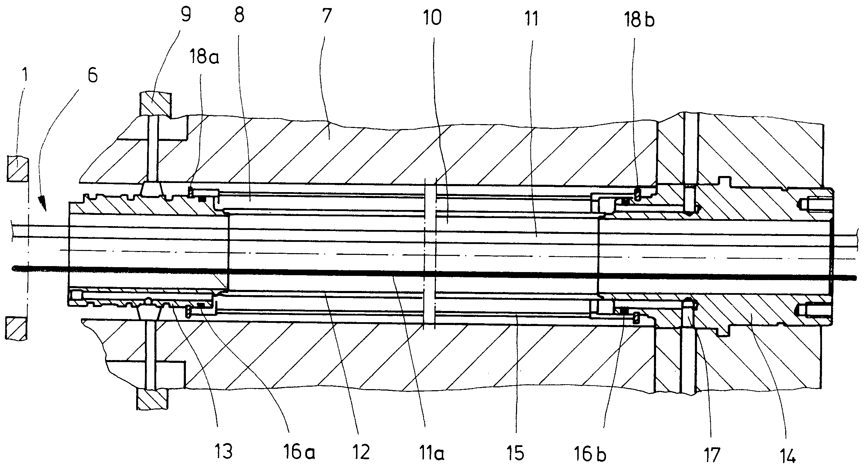

Gemäß Figur 1 besteht der Antriebsstrang einer - nicht weiter dargestellten - Windkraftanlage im Wesentlichen aus einem Rotor 1 zur Umwandlung einer Windströmung in eine Drehbewegung, ein diesem nachgeschaltetes Planetengetriebe 2 zur Übersetzung der vom Rotor 1 erzeugten Drehbewegung ins Schnelle und einem ausgangsseitig des Planetengetriebes 2 angeordneten Generator 3 zur Erzeugung elektrischer Energie aus der Drehbewegung.

Der Rotor 1 überträgt die Drehbewegung über eine Rotorwelle 4 zum Planetengetriebe 2. Eine Getriebewelle 5 verbindet das Planetengetriebe 2 mit dem Generator 3. Die Rotorwelle 4 und die Getriebewelle 5 sind bei diesem Ausführungsbeispiel als Hohlwellen ausgebildet und koaxial zueinander angeordnet.

Durch die Rotorwelle 4 und das Planetengetriebe 2verläuft ein doppelwandiges Durchführungsrohr 6 zur Weiterleitung von Versorgungsmitteln zum Rotor 1.

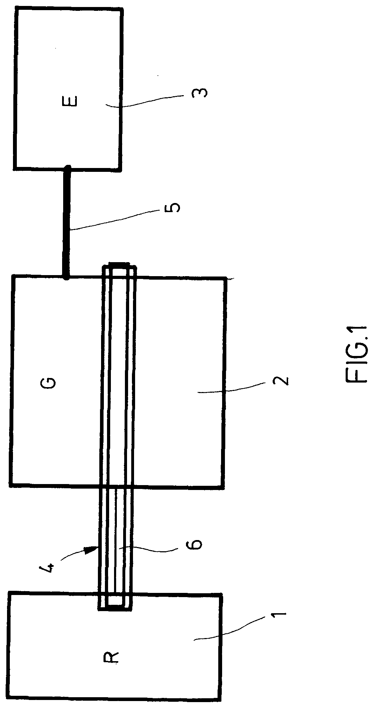

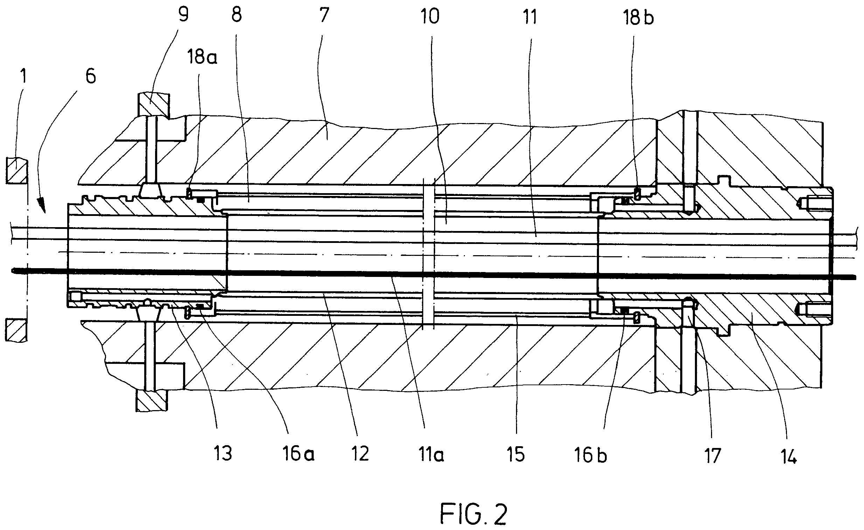

Gemäß Figur 2 ist das doppelwandige Durchführungsrohr 6 durch eine als Hohlwelle ausgebildete Sonnenradwelle 7 des - nicht weiter dargestellten - Planetengetriebes geführt. Ein äußerer Ringkanal 8 des Durchführungsrohres 6 dient als Schmierölleitung zur Schmierung von - hier nur schematisch dargestellten - Planetenlagern 9 des Planetengetriebes. Ein innerer Zentralkanal 10 dient dagegen zum Hindurchführen von Versorgungsleitungen 11 sowie einem Getriebegestänge 11a (exemplarisch) zum Bereich des Rotors 1.

Das doppelwandige Durchführungsrohr 6 besitzt ein inneres Rohr 12, das endseitig mit je einem Endstück 13 und 14 zur Festlegung des Wandabstandes zwischen dem inneren Rohr 12 und einem äußeren Rohr 15 fest verbunden ist. Das koaxial zum inneren Rohr 12 angeordnete äußere Rohr 15 ist über je einen Dichtring 16a bzw. 16b auf die Endstücke 13 und 14 lösbar aufgesteckt. Das Endstück 13 weist in diesem Ausführungsbeispiel einen Außendurchmesser auf, der kleiner als der Innendurchmesser des äußeren Rohres 15 ist, um das Aufstecken des äußeren Rohrs 15 durch Axialverschiebung zu gewährleisten.

Das hohlzylinderartig geformte Endstück 14 besitzt einen Schmierölkanal 17, der von außenradial des Endstückes 14 in Axialrichtung in den äußeren Ringkanal 8 des doppelwandigen Durchführungsrohres 6 führt. Von hier aus wird das Schmieröl über den Schmierölkanal 17 zum Bereich des Planetenlagers 9 transportiert.

Das äußere Rohr 15 ist über zwei je endseitig angeordnete Federringe 18a bzw. 18b an den je zugeordneten Endstücken 13 bzw. 14 fixiert, so dass im montiertem Zustand eine Axialverschiebung relativ zum inneren Rohr 12 verhindert wird. Die feste Verbindung der Endstücke 13 und 14 mit dem inneren Rohr 12 wird durch eine Schweißverbindung hergestellt. Hierfür bestehen die beiden Endstücke 13 und 14 sowie das innere Rohr 12 aus einem schweißbaren Stahlmaterial. Das übergeschobene äußere Rohr 15 ist ebenfalls aus Stahl hergestellt.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, dass durch den Zentralkanal 10 auch andere Versorgungsmittel zum Bereich des Rotors 1 geführt werden, die dessen Betrieb sicherstellen.

### Bezugszeichenliste

- 1: Rotor
- 2: Planetengetriebe
- 3: Generator
- 4: Rotorwelle
- 5: Getriebewelle
- 6: Durchführungsrohr
- 7: Sonnenradwelle
- 8: Ringkanal
- 9: Planetenlager
- 10: Innerer Zentralkanal
- 11: Versorgungsleitung
- 11a: Getriebegestänge
- 12: Inneres Rohr
- 13: Endstück
- 14: Endstück
- 15: Äußeres Rohr
- 16: Dichtring
- 17: Schmierölkanal
- 18: Federring

## Patentansprüche

1. Vorrichtung zur Übertragung von Versorgungsmitteln durch einen Antriebsstrang einer Windkraftanlage, welche einen Rotor (1) zur Umwandlung einer Windströmung in eine Drehbewegung aufweist, der über eine Rotorwelle (4) eingangsseitig eines Planetengetriebes (2) zur Übersetzung ins Schnelle angeordnet ist, das ausgangsseitig an einen Generator (3) zur Erzeugung elektrischer Energie aus der Drehbewegung angeschlossen ist, wobei zumindest durch eine als Hohlwelle ausgebildete Sonnenradwelle (7) des Planetengetriebes (2) ein doppelwandiges Durchführungsrohr (6) zur Weiterleitung der Versorgungsmittel zum Rotor (1) geführt ist, wobei ein äußerer Ringkanal (8) als Schmierölleitung zur Schmierung der Planetenlager (9) des Planetengetriebes (2) und ein innerer Zentralkanal (10) zur Hindurchführung von Versorgungsleitungen (11) zum Rotor (1) ausgebildet ist,
**dadurch gekennzeichnet, dass** das doppelwandige Durchführungsrohr (6) ein inneres Rohr (12) aufweist, das endseitig mit je einem Endstück (13, 14) zur Festlegung des Wandabstandes zwischen dem inneren Rohr (12) und einem äußeren Rohr (15) fest verbunden ist, wobei das koaxial zum inneren Rohr (12) angeordnete äußere Rohr (15) über je einen Dichtring (16a, 16b) auf die Endstücke (13, 14) lösbar aufgesteckt ist.

2. Vorrichtung nach Anspruch 1,
**dadurch gekennzeichnet, dass** zumindest eines der Endstücke (13; 14) einen Außendurchmesser aufweist, der kleiner als der Innendurchmesser des äußeren Rohres (15) ist.

3. Vorrichtung nach Anspruch 1,
**dadurch gekennzeichnet, dass** zumindest eines der hohlzylinderartig geformten Endstücke (14) mindestens einen Schmierölkanal (17) aufweist, der von außenradial des Endstückes (14) in Axialrichtung in den äußeren Ringkanal (8) des doppelwandigen Durchführungsrohres (6) führt.

4. Vorrichtung nach Anspruch 1,
**dadurch gekennzeichnet, dass** die feste Verbindung des Endstücks (13; 14) mit dem inneren Rohr (12) als Schweißverbindung ausgeführt ist.

5. Vorrichtung nach Anspruch 1,
**dadurch gekennzeichnet, dass** das äußere Rohr (15) derart über mindestens einen Federring (18a; 18b) an zumindest einem Endstück (13; 14) fixiert ist, dass eine Axialverschiebung relativ zum inneren Rohr (12) verhindert wird.

6. Vorrichtung nach Anspruch 1,
**dadurch gekennzeichnet, dass** das innere Rohr (12), das äußere Rohr (15) und die beiden Endstücke (13, 14) aus Stahl ausgeführt sind.

7. Vorrichtung nach Anspruch 1,
**dadurch gekennzeichnet, dass** der das Schmieröl enthaltende äußere Ringkanal (8) im Betrieb mit einem Schmierdruck von 1 bis 3 bar, vorzugsweise 1,5 bis 2 bar, beaufschlagbar ist.

8. Vorrichtung nach Anspruch 1,
**dadurch gekennzeichnet, dass** die durch den inneren Zentralkanal (10) verlaufenden Versorgungsleitungen (11) als hydraulische oder elektrische Leitungen ausgebildet sind.

9. Vorrichtung nach Anspruch 1,
**dadurch gekennzeichnet, dass** neben den Versorgungsleitungen (11) durch den inneren Zentralkanal (10) ein Getriebegestänge (11a) zur Verstellung des Rotors (1) verläuft.

10. Windkraftanlage mit einem Antriebsstrang, umfassend einen Rotor (1) zur Umwandlung einer Windströmung in eine Drehbewegung, der über eine Rotorwelle (4) eingangsseitig eines Getriebes zur Übersetzung ins Schnelle angeordnet ist, das ausgangsseitig an einen Generator zur Erzeugung elektrischer Energie aus der Drehbewegung angeschlossen ist,
**dadurch gekennzeichnet, dass** das durch mindestens einen Teil des Antriebsstrangs eine Vorrichtung zur Übertragung von Versorgungsmitteln nach einem der vorstehenden Ansprüche 1-9 verläuft.

## Claims

1. Apparatus for transferring supply media through a drive train of a wind power plant which has a rotor (1) for converting a wind flow into a rotational movement, which rotor (4) is arranged via a rotor shaft (4) on the input side of a planetary transmission (2) for a step-up transmission, which planetary transmission (2) is connected on the output side to a generator (3) for generating electric energy from the rotational movement, a double-walled leadthrough pipe (6) for forwarding the supply media to the rotor (1) being guided at least through a sun gear shaft (7) of the planetary transmission (2), which sun gear shaft is configured as a hollow shaft, an outer annular duct (8) being configured as a lubricating oil line for lubricating the planetary bearings (9) of the planetary transmission (2), and an inner central duct (10) being configured for leading through supply lines (11) to the rotor (1), **characterized in that** the double-walled leadthrough pipe (6) has an inner pipe (12) which is connected fixedly on the end side to in each case one end piece (13, 14) for fixing the wall spacing between the inner pipe (12) and an outer pipe (15), the outer pipe (15) which is arranged coaxially with respect to the inner pipe (12) being plugged releasably onto the end pieces (13, 14) via in each case one sealing ring (16a, 16b).

2. Apparatus according to Claim 1, **characterized in that** at least one of the end pieces (13; 14) has an external diameter which is smaller than the internal diameter of the outer pipe (15).

3. Apparatus according to Claim 1, **characterized in that** at least one of the hollow-cylindrically shaped end pieces (14) has at least one lubricating oil duct (17) which leads from radially outside the end piece (14) in the axial direction into the outer annular duct (8) of the double-walled leadthrough pipe (6).

4. Apparatus according to Claim 1, **characterized in that** the fixed connection of the end piece (13; 14) to the inner pipe (12) is configured as a welded connection.

5. Apparatus according to Claim 1, **characterized in that** the outer pipe (15) is fixed to at least one end piece (13; 14) via at least one spring ring (18a; 18b) in such a way that an axial displacement relative to the inner pipe (12) is prevented.

6. Apparatus according to Claim 1, **characterized in that** the inner pipe (12), the outer pipe (15) and the two end pieces (13, 14) are configured from steel.

7. Apparatus according to Claim 1, **characterized in that** the outer annular duct (8) which contains the lubricating oil can be loaded during operation with a lubricating pressure of from 1 to 3 bar, preferably of from 1.5 to 2 bar.

8. Apparatus according to Claim 1, **characterized in that** the supply lines (11) which run through the inner central duct (10) are configured as hydraulic or electric lines.

9. Apparatus according to Claim 1, **characterized in that**, in addition to the supply lines (11), a transmission linkage (11a) for adjusting the rotor (1) runs through the inner central duct (10).

10. Wind power plant having a drive train, comprising a rotor (1) for converting a wind flow into a rotational movement, which rotor (1) is arranged via a rotor shaft (4) on the input side of a transmission for a step-up transmission, which transmission is connected on the output side to a generator for generating electric energy from the rotational movement, **characterized in that** an apparatus for transmitting supply media according to one of the preceding Claims 1-9 runs through at least one part of the drive train.

## Revendications

1. Dispositif de transmission de moyens d'alimentation par le biais d'une chaîne de transmission d'une éolienne, qui présente un rotor (1) pour la conversion d'un écoulement éolien en un mouvement de rotation, qui est disposé par l'intermédiaire d'un arbre de rotor (4) à l'entrée d'un engrenage planétaire (2) pour la transmission à effet multiplicateur, qui est raccordé à la sortie à un générateur (3) pour la production d'énergie électrique à partir du mouvement de rotation, dans lequel un tube de passage à double paroi (6) est conduit au moins à travers un arbre de roue solaire (7) de l'engrenage planétaire (2) constitué par un arbre creux pour conduire les moyens d'alimentation jusqu'au rotor (1), dans lequel un canal annulaire extérieur (8) est formé comme conduite d'huile de lubrification pour la lubrification des paliers de satellites (9) de l'engrenage planétaire (2) et un canal central intérieur (10) est configuré en vue de conduire des lignes d'alimentation (11) jusqu'au rotor (1), **caractérisé en ce que** le tube de passage à double paroi (6) présente un tube intérieur (12), qui est fermement assemblé à l'extrémité chaque fois à une pièce terminale (13, 14) destinée à fixer la distance des parois entre le tube intérieur (12) et un tube extérieur (15), dans lequel le tube extérieur (15) disposé coaxialement au tube intérieur (12) est emboîté de façon amovible sur les pièces terminales (13, 14) chaque fois avec un joint d'étanchéité (16a, 16b).

2. Dispositif selon la revendication 1, **caractérisé en ce qu'**au moins une des pièces terminales (13; 14) présente un diamètre extérieur, qui est plus petit que le diamètre intérieur du tube extérieur (15).

3. Dispositif selon la revendication 1, **caractérisé en ce qu'**au moins une des pièces terminales en forme de cylindre creux (14) présente au moins un canal d'huile de lubrification (17), qui conduit depuis le côté radialement extérieur de la pièce terminale (14) en direction axiale jusque dans le canal annulaire extérieur (8) du tube de passage à double paroi (6).

4. Dispositif selon la revendication 1, **caractérisé en ce que** l'assemblage fixe de la pièce terminale (13; 14) avec le tube intérieur (12) est constitué par un assemblage soudé.

5. Dispositif selon la revendication 1, **caractérisé en ce que** le tube extérieur (15) est fixé par au moins un anneau élastique (18a; 18b) à au moins une pièce terminale (13; 14), de telle manière qu'un déplacement axial par rapport au tube intérieur (12) soit empêché.

6. Dispositif selon la revendication 1, **caractérisé en ce que** le tube intérieur (12), le tube extérieur (15) et les deux pièces terminales (13, 14) sont fabriqué(e)s en acier.

7. Dispositif selon la revendication 1, **caractérisé en ce que** le canal annulaire extérieur (8) contenant l'huile de lubrification peut être soumis en service à une pression de lubrification de 1 à 3 bar, de préférence de 1,5 à 2 bar.

8. Dispositif selon la revendication 1, **caractérisé en ce que** les lignes d'alimentation (11) passant par le canal central intérieur (10) sont réalisées sous forme de lignes hydrauliques ou électriques.

9. Dispositif selon la revendication 1, **caractérisé en ce qu'**une tringlerie de transmission (11a) destinée au déplacement du rotor (1) s'étend à travers le canal central intérieur (10) en plus des lignes d'alimentation (11).

10. Eolienne comportant une chaîne de transmission, comprenant un rotor (1) pour la conversion d'un écoulement éolien en un mouvement de rotation, qui est disposé par l'intermédiaire d'un arbre de rotor (4) à l'entrée d'un engrenage pour la transmission à effet multiplicateur, qui est raccordé à la sortie à un générateur pour la production d'énergie électrique à partir du mouvement de rotation, **caractérisée en ce qu'**un dispositif pour la transmission de moyens d'alimentation selon l'une quelconque des revendications 1 à 9 s'étend à travers au moins une partie de la chaîne de transmission.
